(19) Europäisches Patentamt
European Patent Office
Office européen des brevets

(11) **EP 3 447 839 A1**

(12) **EUROPEAN PATENT APPLICATION**

(43) Date of publication:
**27.02.2019 Bulletin 2019/09**

(51) Int Cl.:
***H01P 1/161*** *(2006.01)*

(21) Application number: **17306086.4**

(22) Date of filing: **21.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Shanghai Bell Co., Ltd.
Shanghai 201206 (CN)**

(72) Inventors:
• **LE BAYON, Armel
44570 Trignac (FR)**
• **TUAU, Denis
44570 Trignac (FR)**

(74) Representative: **Croonenbroek, Thomas Jakob et al
Innovincia
11, avenue des Tilleuls
74200 Thonon-les-Bains (FR)**

(54) **METHOD AND APPARATUS FOR ELECTROMAGNETIC SIGNAL WAVEGUIDES**

(57) The invention relates to a method comprising :
◦ milling of a first waveguide substrate element (1a) to provide two waveguide cavities (3, 5a) with respectively a first and a second port (3*re*, 5*re*) on a common side of the first substrate element (1a),

◦ milling of a recess (5b) on a side of a second waveguide substrate element (1b),
◦ assembling the first and second substrate elements (1a, 1b) so that the waveguide cavities (3, 5a) and the recess (5b) form a continuous waveguide.

Fig. 5

## Description

## Technological Field

The present invention concerns an orthomode transducer waveguide assembly, in particular for microwave frequencies, and for use in radio frequency communication systems.

## Technological Background

Waveguides, in particular microwave waveguides, are made using tubular segments of constant or near-constant transverse sections. The tubular segments are for example pipes made of metallic material at least on the inner surface of the walls (e.g. metal sheet on plastic walls). The skin effect and geometric properties of the waveguide then ensure that waves propagate along a longitudinal axis of the tubular segment, divided into stable electrical and magnetic propagation modes which are individual solutions to the linear propagation equation.

The tubular segments are connected to eachother using flanges, angle bends and articulated connectors, resulting in waveguide assemblies combining different waveguide segments, each with particular functions (combiners, bends, change in transverse section, waveband filtering, orthogonal mode selector, etc.).

In an uplink or transmit function, an orthomode transducer may use two microwave generating or transmitting units, for example two radio frequency (RF) transmit chains or transmitters, each producing a RF microwave signal using modes orthogonal to each other (e.g. TE01 and TE10). Said signals are then combined in an orthomode transmission, which is forwarded to the antenna where it is emitted for wireless transmission (radar, cellular radio networks e.g. in 2G, 3G, LTE, 4G or 5G, etc, or point-to-point microwave systems, television etc.).

As an alternative, the initial RF signal may be generated in another spectrum band than microwave, and by an electromagnetic signal generating element.

In a downlink or receive function, an orthomode transducer may use two microwave receiving units, for example two RF receive chains or receivers, the orthogonally polarized signal received from an antenna can be separated into two single mode signals and each of the two single mode signals are channeled through a separate waveguide to a receiver.

In the uplink function, the orthomode transducer is fed the signals from two microwave generating units, and combines the signals into an orthogonal mode wave signal, which is then guided to an antenna. The antenna then radiates the orthogonal mode wave.

Some waveguide assemblies for orthomode transducers comprise a combiner, with two orthogonally oriented rectangular sections, and one or more rectangular to square or circular section adapters to transform the combined rectangular single mode wavefront signals in a single combined square or circular wavefront.

In particular, said assemblies are often made by milling two symmetrical halves of the inner volume in metal blocks or slabs, and then assembling the two halves.

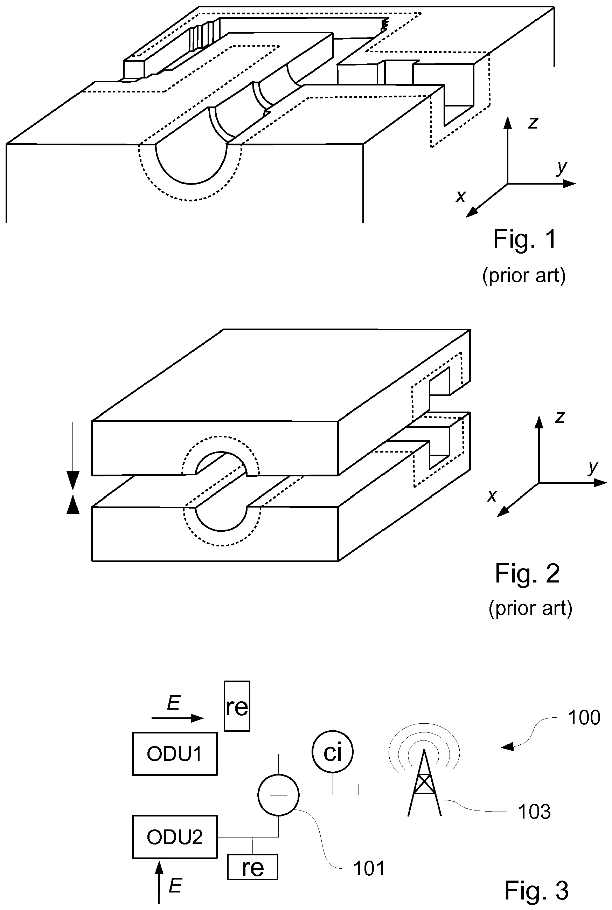

Figures 1 and 2 illustrate the state of the art process.

Figure 1 represents a milled half waveguide assembly. In figure 1, halves of the waveguides, with either rectangular, circular or square cross-sections, extending along propagation axes, which are contained in the *xy* separation plane.

The waveguide halves are milled in a metallic substrate block, and two symmetrical halves are assembled, as depicted in figure 2, and welded, brazed or screwed together.

In particular, to avoid electromagnetic radiation losses along the joins that appear where the separation plane intersects with the different waveguide sections, a complex form and surface control, gasket and/or brazing is required on or around the dotted line of figure 2 to reduce or suppress evanescent wave modes and electromagnetic radiation leaking from the joins.

The welding, brazing or arranging of a gasket on such a complex contour is expensive, and may introduce weak points when the soldering has different dilatation values than the rest of the waveguide and the temperature varies. The welding may also be more susceptible to oxidization so that electromagnetic energy may eventually be lost when the sealing becomes incomplete, and the two blocks may even end up falling apart.

It would therefore be desirable to provide an alternative apparatus.

## Brief Summary

According to various, but not necessarily all, embodiments of the invention there is provided a method comprising :

    ∘ milling a first waveguide substrate element to provide two waveguide cavities with respectively a first and a second port on a common side of the first waveguide substrate element,

    ∘ milling a recess on a side of a second waveguide substrate element,

    ∘ assembling the first and second waveguide substrate elements so that the waveguide cavities and the recess form a continuous first waveguide.

The milling of the waveguide cavities may comprise milling a through hole forming an antenna feed waveguide section.

The method may additionally require milling of an additional second waveguide, with a port on a side adjacent to the common side carrying the ports, and ending at the waveguide cavity.

The first and second waveguides may have rectangular cross-sections on at least part of their cavities, the length axes of said rectangular cross-sections being perpendicular to each-other.

The waveguide section may be milled with longitudinal portions having different cross sections so as to form a rectangular to circular converter, with a rectangular port on the common side and a circular port on the opposite side relative to the common side of the first waveguide substrate element.

The antenna feed waveguide section may be milled with longitudinal portions having different cross sections so as to form a rectangular to square converter, with a rectangular port on the common side and a square port on the opposite side relative to the common side of the first waveguide substrate element.

The milling of the waveguide cavities, may comprise the second waveguide cavity being obtained by milling two straight cavities from two adjacent sides of the first waveguide substrate element, in a way that said cavities join to form a milled cavity bend which forms the second waveguide cavity.

The milling of the two straight cavities from two adjacent sides of the first waveguide substrate element, may comprise milling a stepped, chamfered or circular bend at the joining ends of the straight cavities.

The milling of a recess in the second substrate element may comprise milling steps, chamfers or circular walls on longitudinal ends of the recess to form stepped, chamfered or circular bends at said longitudinal ends.

The first and/or second waveguide substrate elements may be made of metal.

The first and/or second wave guide substrate elements may be dielectric substrate elements, and the method may further comprise metallizing the inner walls of the cavities.

The method may further comprise :

  ○ milling a groove surrounding the first and second ports of the waveguide cavities located on the common side of the first substrate element and/or of the side of the second substrate element, and,

  ○ inserting a gasket in the groove when assembling the first and second substrate elements together.

According to various, but not necessarily all, embodiments of the invention there is provided an associated apparatus, comprising :

  ○ a first waveguide substrate element comprising two waveguide cavities having respectively a first and a second port located on a common side of the first waveguide substrate element; and

  ○ a second waveguide substrate element having a recess located on a first side of the second waveguide substrate element, wherein the common side of the first substrate element and the first side of the second substrate element are configured to be joined across a joint.

According to various, but not necessarily all, embodiments of the invention there is provided a radio system, comprising :

  ○ two signal generating elements;

  ○ an antenna; and

  ○ an orthomode transducer comprising :

    ▪ a first waveguide substrate element, having a first and a second signal generating element waveguide sections and an antenna feed waveguide section, the first signal generating element waveguide section and the antenna feed waveguide section having respectively a first and a second port on a common side of the first waveguide substrate element, and the second signal generating element waveguide sections having an end configured to couple to the antenna feed waveguide section,

    ▪ a second waveguide substrate element, having a recess on a first side of the second waveguide substrate element, the waveguide cavities and the recess being configured to be joined across a joint,

  wherein the first and second signal generating element waveguide sections are configured to be connected each to one of the signal generating elements and the antenna feed waveguide section is configured to be connected to the antenna.

The first and second signal generating elements may each be configured to generate a signal polarized orthogonally to one another, and the first and the second signal generating element waveguide sections may have rectangular cross-sections, and the antenna feed waveguide portion may comprise longitudinal portions having different cross sections so as to form a rectangular to circular or square converter, with a rectangular port located on the common side of the first substrate element and a circular or square port connected to the antenna.

**Brief Description**

Other characteristics and advantages of the invention will appear at the reading of the following description, given in an illustrative and not limiting fashion, of the following figures, among which :

- figures 1 and 2 illustrate the state of the art process to obtain an orthomode transducer,
- figure 3 is a schematic representation of an example of an orthomode transducer for a mobile network antenna,
- figures 4a, 4b and 4c illustrate the dimensioning of the square and rectangular cross sections of different segments of the waveguide,
- figure 5 is a cut away illustration of an example of an orthomode transducer according to the invention,
- figure 6 illustrates an example of a method to obtain the orthomode transducer of figure 5,
- figures 7a to 7e, 8a, 8b, 9a and 9b illustrate an example of the main steps of the method to obtain an orthomode transducer according to figure 6.

In all figures, the same references apply to the same element.

Though the figures refer to precise embodiments of the invention, other embodiments may be obtained by combining or altering slightly the represented embodiments, said new embodiments are also within the scope of the invention.

**Detailed description of embodiments of the invention**

In an example embodiment, Figure 3 shows a schematic representation of a radio system 100 comprising an orthomode transducer (OMT) 101, the radio system 100 being configured as an outdoor transmitter. Such radio systems comprising orthomode transducers 101 are used in 3G to 5G wireless networks to transmit data from one antenna to another antenna in the network, and thus forward data from cell to cell at network level. Other possible uses may include radar imaging, and network communication other than 3G or 4G cell-to-cell. In some, but not necessarily all, embodiments the radio system 100 may be configured as an indoor transmitter, an indoor receiver, an indoor transceiver, an outdoor transceiver or an outdoor receiver dependent on how the radio system is configured to be used.

In the example embodiment, the radio system 100 is configured to transmit RF microwave signals via an antenna 103 in an uplink direction to another antenna (not illustrated in Figure 3). The OMT 101 comprises at least 3 waveguide sections, each waveguide section being coupled to one port, and because the radio system is configured for transmission this sets an orientation for the waveguide sections where each port is one of an inlet or an outlet. In some, but not necessarily all, embodiments the OMT 101 may comprise one or more port which is an inlet and an outlet if the radio system 100 is configured to be used in a transceiver mode.

The antenna 103 is an exterior antenna, for example for intercellular communication. The radio frequency microwave signals are consequently generated by so called outdoor units (ODU).

An outdoor unit (ODU) is a radio frequency microwave equipment which may comprise one or more, and not limited to, of the following : a transmitter, a receiver, a transceiver, a radio system. The radio system 100 comprises an orthomode transducer 101, a first outdoor unit ODU1 and a second outdoor unit ODU2.

As an alternative, different radio frequency signal generating elements may be used according to the intended use of the associated antenna (radio frequency oscillating dipoles, microwave generators, radar pattern generators etc.).

Each outdoor unit ODU1, ODU2 generates a polarized electromagnetic wave, for example using oscillating dipoles. The electromagnetic waves of the first and second outdoor units ODU1, ODU2 are polarized orthogonally to one another in the wavefront plane.

To generate the electromagnetic waves, the outdoor units ODU1, ODU2 may use spatially oriented dipoles. Said dipoles are oriented in orthogonal directions. In the case of circular or other non-static polarization, the orthogonality may be ensured by a phase shift between the generated signals equal to $\pi/2$.

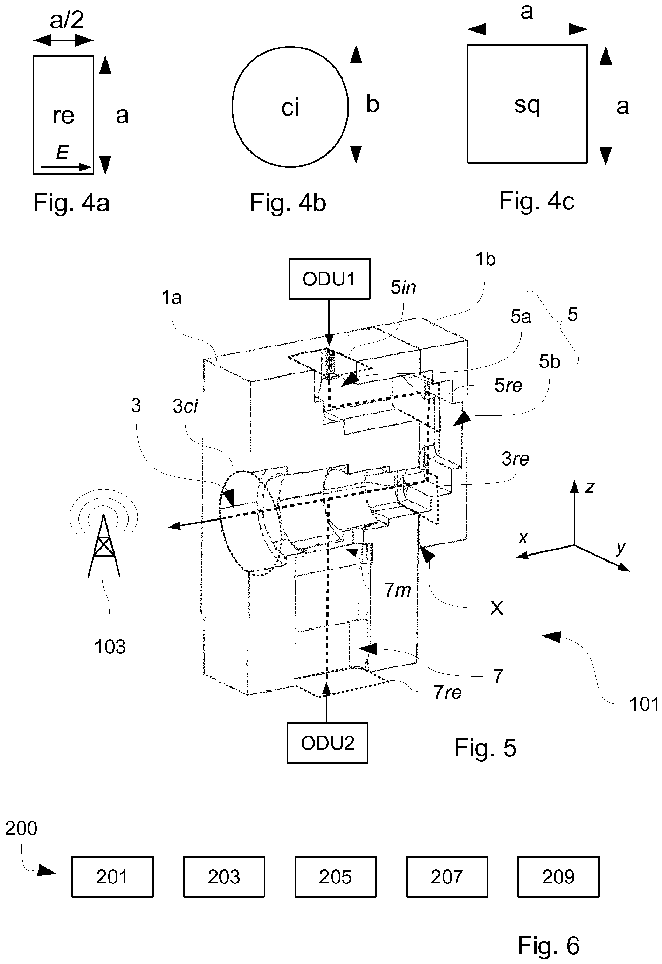

As can be seen in Figures 4a, 4b and 4c, ODU1 and ODU2 will comprise at least one waveguide configured to couple the generated RF microwave signals to the OMT 101. The electromagnetic waves in the rectangular cross sections ($re$) are of two different sorts : horizontally polarized (output of ODU1, see E field arrow) and vertically polarized (output of ODU2, see *E* field arrow). The horizontally polarized waves propagate in a rectangular cross section ($re$) where the longer sides of the rectangle are vertical, the vertically polarized waves propagate in a rectangular cross section ($re$) where the longer sides of the rectangle are horizontal.

The electromagnetic waves generated by the outdoor units ODU1, ODU2 are combined into a single orthogonal mode wave in an orthomode transducer 101. A waveguide then carries the orthogonal mode wave to an antenna 103 where the signal is emitted in electromagnetic wave form.

In transmission or uplink mode, the transducer 101 combines the two signals from each of the outdoor units ODU1, ODU2 in a single circular electromagnetic wavefront signal in a circular ($ci$) cross-section waveguide. Said circular ($ci$) cross section waveguide is connected to the antenna 103.

As an alternative, the cross section of the waveguide in which the combined orthogonal mode waves propagate from the transducer 101 to the antenna 103 may be of square ($sq$) cross section.

In other example embodiments, for example, in a receiving or downlink mode radio system, the electromagnetic waves come in from the antenna 103 in a combined mode, and the transducer 101 separates the orthogonal modes into two separate orthogonal electromagnetic waves.

The dimensioning of the circular ($ci$), rectangular ($re$), and square ($sq$) cross-sections are shown respectively in further detail in figures 4a, 4b and 4c.

The electromagnetic waves conveyed in the waveguide are comprised in a frequency band comprised between two extreme frequency values with a factor 1.2 between a lower and an upper cut-off frequency, $f_1$ and $f_2$ respectively for the square and rectangular cross sections, and 1.3 for the circular cross section. The frequency band in use defines a nominal guide wavelength $\lambda_g$.

In figure 4a, the longer side of the rectangular (*re*) cross section has a length represented by the parameter *a*, the short side has a length *a*/2 (half the length of parameter *a*).

In figure 4b, the circular (*ci*) cross section has a diameter represented by a second parameter *b*.

The square cross-section (*sq*) in figure 4c has a side length represented by the parameter *a*, its length and height being the same.

The first length parameter *a* is bound to the lower cut off frequency by $a \geq 163/f_1$ where *a* is given in millimetres (mm) and $f_1$ is given in GigaHertz (GHz) in a particular embodiment. In particular, the chosen length *a* defines a guide cut-off wavelength $\lambda_c$ given by $2a = \lambda_c$.

The second length parameter *b* is bound to the lower cut-off frequency $f_1$ by

$$b = \frac{1,8412\,c}{\pi f_1} \quad \text{or } b = 0,59\lambda_c$$

where *b* is given in meters (m), *c* is the speed of light in meters per second (m/s), and $f_1$ is given in hertz (Hz).

The formulae above are used in the case of TE modes of the lower orders, and may in particular vary according to the main propagation modes in use.

In particular, the frequency domain that can be used with a waveguide according to the invention is reaching from 5.9 GHz to 86 GHz with different length parameters *a*, *b* for different frequency bands.

Figure 5 is a cut-away view of an orthomode transducer 101 according to an example embodiment of the invention. The section plane *xz* in figure 5 is the plane containing the longitudinal axes of the different depicted waveguide sections 3, 5, 7 (dotted lines).

The orthomode transducer 101 is divided into two substrate elements 1a and 1b, comprising a first element 1a and a second element 1b. The first substrate element 1a is, in this example embodiment, a parallelepiped and made of metal, for example aluminium. The second substrate element 1b is a metal block adjoined on one side of the substrate block 1a, for example by welding or brazing the substrate block 1b on the substrate block 1a.

The substrate elements 1a, 1b are labelled "first" and "second" only for clarity purposes, and without preference, chronological or other considerations.

The cavities forming the waveguides on assembly are milled inside said first element 1a and second element 1b.

In other example embodiments, as an alternative, the first and/or second substrate elements 1a, 1b may me made of dielectric material, like plastic, and the inner walls of the cavities are then metallized by applying on the inner walls a metallic material layer, with a thickness larger than at least four to five times the skin depth of the considered metal. At least part of the cavities can then be obtained during a moulding of the different substrate elements 1a, 1b.

The orthomode transducer 101 comprises three distinct waveguide sections : an antenna feed waveguide section 3, a first outdoor unit waveguide section 5, and a second outdoor unit waveguide section 7.

The antenna feed waveguide section 3 comprises a circular outlet 3*ci*, and a rectangular inlet 3*re.* The antenna feed waveguide section 3 comprises different sections along its longitudinal axis, each with a different cross-section. In particular, the antenna feed waveguide section 3 comprises portions forming steps with circular cross-sections of different diameters, and one rectangular portion.

In this particular embodiment, the antenna feed waveguide section 3 comprises four longitudinal portions or stages with each portion having a different cross-section.

The first portion from the rectangular inlet 3*re* has a rectangular cross-section. The three following portions have circular cross-sections, the diameter of which increases with the proximity to the circular outlet 3*ci.*

Thanks to this architecture, the antenna feed 3 acts as a rectangular to circular converter.

The antenna feed waveguide section 3 is made of a through-hole in the first substrate element 1a, composed of milled stages with different cross-sections, a rectangular inlet 3*re* and a circular outlet 3*ci*, the different portions forming a rectangular to circular converter. The outlet of the antenna feed 3 is, on assembly, connected to an antenna 103 which will radiate a signal carried by the electromagnetic waves in the antenna feed waveguide section 3 in transmission mode. In other example embodiments, the outlet of the antenna feed 3 is, on assembly, connected to an antenna 103 which will receive an electromagnetic wave signal and couple the signal to the antenna feed waveguide section 3 in receiving mode. In this case, the outlet 3ci of the antenna feed waveguide section becomes an inlet and the inlet 3re becomes an outlet since the received electromagnetic wave signal is moving in the opposite direction compared to the transmission mode.

In transmission mode, a signal produced by a first outdoor unit ODU1 is fed into the first outdoor unit waveguide section 5. Said first outdoor unit waveguide section 5 comprises an inlet 5*in* on a side perpendicular to the side of the first substrate element 1a carrying the outlet of the antenna feed 3.

The first outdoor unit waveguide section 5 spans over the first and second substrate elements 1a and 1b. The first outdoor unit waveguide section 5 comprises a cavity bend 5a, milled in the first substrate element 1a, comprising two orthogonal straight portions, with a port 5*in* on a side perpendicular to the side carrying the antenna feed waveguide section 3 outlet 3*ci*, and a rectangular port 5*re* on the side of the first substrate element 1a against which the second substrate element 1b attaches when assembled.

The bends between the orthogonal straight portions of the first outdoor unit waveguide section 5 are represented as stepped bends, as illustrated in Figures 5, 7e, 8b, 9a and 9b. They may alternatively be chamfered or circular arc bends.

In other example embodiments, according to the architecture of the transducer 101 and surrounding elements, the cavity 5a designated as "cavity bend" may be a straight through-hole with no bend at all and having a feed on the same side as the antenna 103, for example if the first outdoor unit ODU1 is arranged next to the antenna 103 when the orthomode transducer 101 is assembled.

The second substrate element 1b and the recess 5b milled therein span over the ports 3*re* and 5*re* of the antenna feed waveguide portion 3 and cavity bend 5a, respectively, where the ports 3re and 5re are located on the side of the substrate element 1a against which the second substrate element 1b is placed when the waveguide assembly forming the orthomode transducer 101 is assembled. In Figure 5, the first substrate element 1a and the second substrate element 1b are joined across a joint X formed between the two substrate elements 1a, 1b and the waveguide cavities 3, 5a are coupled to the recess 5b to form a single continuous waveguide across the joint X. The joint X is formed by bringing together the common side of the first substrate element 1a and the side of the second substrate element 1b having the recess 5b.

The joint X can, according to some embodiments, be obtained simply by forming complementary surfaces on the first and second substrate elements 1a, 1b and pressing said elements 1a, 1b against each-other. The joint X may, in examples of alternative embodiments, be completed with a rectangular or ring gasket, a welding or a brazing.

The orthomode transducer 101 further comprises a second outdoor unit waveguide 7, comprising an inlet 7*re* on the side opposite the side featuring the inlet 5*in* of the first outdoor unit waveguide 5. The second outdoor unit waveguide 7 extends perpendicularly to the antenna feed 3 and joins with said antenna feed 3 via a mouth portion 7*m* of the second outdoor unit waveguide 7 forming a stepped rectangular *re* to circular *ci* converter. The second outdoor unit waveguide 7 couples the electromagnetic waves generated by the second outdoor unit ODU2 to the antenna feed 3, where they are combined with the electromagnetic waves coming from the first outdoor unit ODU1 via the first outdoor unit waveguide 5.

Other possible forms than a parallelepiped and a metal block may be possible for the first and second substrate elements 1a, 1b, according to the available space in the transducer 101 and its surroundings.

In particular, the recess 5a may be milled inside another functional component of the waveguide assembly, for example an outer wall or another waveguide of the transducer and/or adjacent network elements.

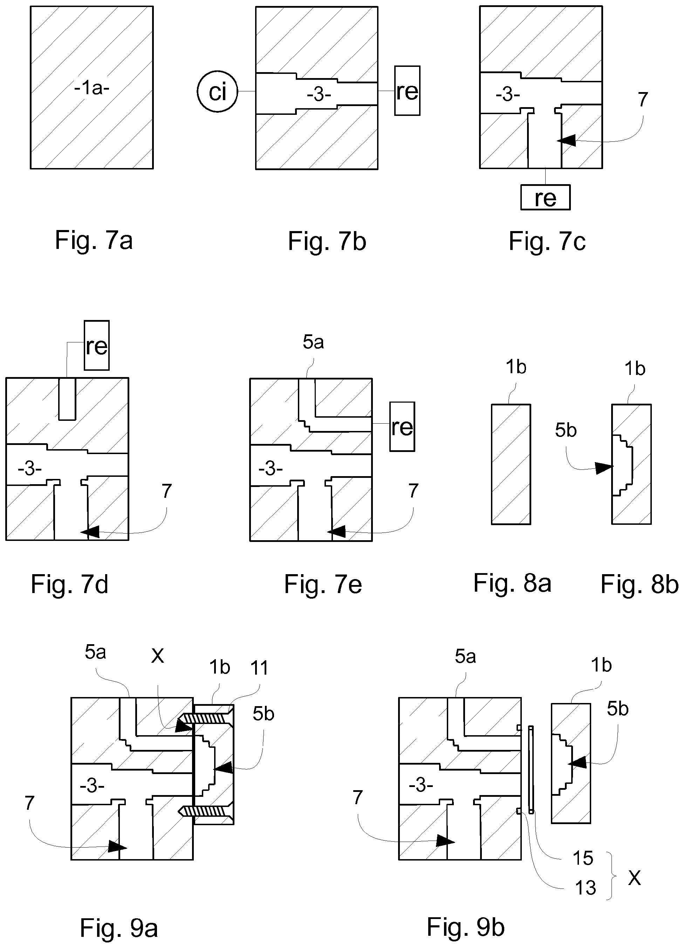

Figure 6 illustrates in a linear flowchart an example of a method 200 to obtain such an orthomode transducer 101. Its blocks 201 to 209 correspond to its main steps which are illustrated in the corresponding figures 7a to 7e, 8a, 8b, 9a, and 9b.

Figures 7a to 7e illustrate the process to form the waveguide cavities inside the parallelepiped first substrate element 1a.

The starting point depicted in cutaway view in figure 7a is the parallelepiped or first substrate element 1a. Said first element 1a may be made of metal, e.g. aluminium, and in particular of soft metal to allow an easier milling and drilling of the waveguides.

At block 201 of the method 200 in Figure 6, and also depicted in figure 7b, the circular (*ci*) cross-section through-hole, forming the antenna feed waveguide section 3 is drilled and milled through the parallelepiped element 1a, joining two opposite sides of the parallelepiped (left and right in figure 6b).

The different circular portions of the antenna feed waveguide section 3 are for example drilled using different drill bits with different diameters, or successive milling passes with different cross-sections generated at different depths. The rectangular portion comprising the inlet 3*re* can in particular be milled from the side opposite the circular port 3*ci*. Alternatively, in other example embodiments, the inlet 3*re* may be circular, the antenna feed 3 being obtained by drilling only.

At block 203 of the method 200 and in figure 7c, the second outdoor unit waveguide section 7 is milled in a side perpendicular to the sides carrying the antenna feed 3 port (lower side in figure 7c). The second outdoor unit waveguide section 7 is milled perpendicularly to the antenna feed waveguide section 3, and ends with a mouth 7*m*, as seen in Figure 5, opening on said antenna feed waveguide section 3, via a bottleneck forming a rectangular (*re*) to circular (*ci*) transition for the guided waves.

The second outdoor unit waveguide 7 is obtained by milling in the direction given by its length axis, the bottleneck and varying cross-section along said axis being obtained by successive milling passes.

At block 205 of the method 200 and in Figures 7d and 7e the milling of the L-bend or more generally cavity bend 5a of the first outdoor unit waveguide 5 is illustrated.

In figure 7d, a first straight portion of the cavity bend 5a is milled with a rectangular (*re*) cross-section, orthogonal to that of the second outdoor unit waveguide 7 in the side of the first substrate element 1a, opposite the side carrying the inlet 7*re* of the second outdoor unit waveguide 7.

In figure 7e, a second straight portion of the cavity bend 5a is milled from the side carrying the inlet 3*re* of the antenna feed 3, parallel to said antenna feed 3 and joining the first straight portion at a right angle, forming an L-bend.

At the bend itself, steps are milled to generate a stepped bend.

At block 207 of the method 200 and in Figures 8a and 8b, the preparing of the second substrate element 1b by milling the recess 5b is illustrated.

The starting point represented in figure 8a is a parallelepiped second substrate element 1b, smaller in height and length than the first parallelepiped substrate element 1a.

In figure 8b, the recess 5b of the first outdoor unit waveguide section 5 is milled in the side of the second element 1b which faces the first element 1a when assembled. The recess is obtained by applying successive milling passes of rectangular shape, the length of which decreases with depth, so as to obtain a rectangular section milling with steps on its longitudinal ends which will cover the ports of the first outdoor unit waveguide 5 and antenna feed 3.

At block 209 of the method 200 and in Figures 9a and 9b, two possible assembling methods of the first substrate element 1a and second substrate element 1b are illustrated. In figures 9a and 9b, the first substrate element 1a and the second substrate element 1b are joined across a joint X formed between the two substrate elements 1a, 1b and the waveguide cavities 3, 5a are coupled to the recess 5b to form a continuous waveguide across the joint X. The joint X is formed by bringing together the common side of the first substrate element 1a and the side of the second substrate element 1b having the recess 5b.

In figure 9a, the second substrate element 1b features holes in which screws 11 are inserted. Said screws 11 cooperate with corresponding bores on the side of the first substrate element 1a to attach the second substrate element 1b to the first substrate element 1a.

When using relatively soft metals, the pressure applied by the screws may be sufficient to ensure electromagnetic sealing of the waveguides, as it generates the joint X by pressing together at least a portion of the common faces of the first and second substrate elements 1a, 1b. To ensure an even better sealing at the joint X, a gasket 15 may be used, as depicted in figure 9b.

The screws may also help maintaining the substrate elements 1a, 1b in place if they feature different thermal expansion behaviours.

Figure 9b shows the first and second substrate elements 1a and 1b in exploded view. In figure 9b, the first substrate element 1a carries a groove 13 of rectangular form, and which surrounds the ports of the antenna feed 3 and L-bend cavity 5a set on a common side of the first substrate element 1a. A rectangular gasket 15, made of softer metal, fits in the groove 13 and ensures the electromagnetic sealing when the second substrate element 1b is pressed against the first substrate element 1a. As an alternative, the second substrate element 1b, and/or both first and second substrate element 1a, 1b may carry the groove 13.

The groove 13 and gasket 15 ensure electromagnetic sealing, and therefore form the joint X, possibly with a portion of the common sides of the first and second substrate elements 1a, 1b.

The rectangular gasket 15 may even be melted to form a brazing or welding by selecting a metal with a lower melting temperature than the substrate of the first and second substrate elements 1a, 1b. In that case, the first and second substrate elements 1a, 1b with the gasket 15 are heated above said melting temperature when assembled, and pressure is applied and maintained during at least part of the ensuing cooling down.

Other forms of gaskets 15 are possible : oval, circular, combined use of two circular, rectangular or square gaskets (one for each port). The architecture of the orthomode transducer 101 may dictate more complex gasket forms, but the gasket 15 stretches only over one side of the first substrate element 1a, so that its form remains much less complex than in the case of two assembled milled metal blocks (figures 1 and 2).

The blocks illustrated in Figure 6 may represent steps in a method. The illustration of a particular order to the blocks does not necessarily imply that there is a required or preferred order for the blocks and the order and arrangement of the blocks may be varied. Furthermore, it may be possible for some blocks to be omitted.

The waveguide assembly forming an orthomode transducer 101 and the process to obtain it are potentially cheaper than the usual orthomode transducers 101. They may allow to obtain better sealed waveguides inside the orthomode transducer 101, which means that less electromagnetic energy is lost and more complex signals can be transmitted with less error.

The total area of the gasket is much smaller than conventional orthomode transducers which leads to much smaller electromagnetic losses and a cheaper gasket. In addition, since only one of the waveguide sections comprises the gasket, this leads to much smaller electromagnetic losses since two of the three waveguide sections will not have any electromagnetic losses due to the lack of a seal across these waveguide sections.

The term 'coupled' or 'couple' or a similar term means functionally or physically interconnected with any number or combination of intervening elements (including no intervening elements). Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples.

Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A method comprising :

   ◦ milling a first waveguide substrate element (1a) to provide two waveguide cavities (3, 5a) with respectively a first and a second port (3re, 5re) on a common side of the first waveguide substrate element (1a),
   ◦ milling a recess (5b) on a side of a second waveguide substrate element (1b),

   ◦ assembling the first and second waveguide substrate elements (1a, 1b) so that the waveguide cavities (3, 5a) and the recess (5b) form a continuous first waveguide.

2. Method according to claim 1, wherein milling the waveguide cavities (3, 5a) comprises milling a through hole forming an antenna feed waveguide section (3).

3. Method according to claim 2 further comprising milling an additional second waveguide (7), with a port on a side adjacent to the common side carrying the ports (3re, 5re), and ending at the waveguide cavity (3).

4. Method according to claim 3, wherein the first (5) and second (7) waveguides have rectangular cross-sections on at least part of their cavities, the length axes of said rectangular cross-sections being perpendicular to each-other.

5. Method according to claim 2, 3 or 4, wherein the waveguide section (3) is milled with longitudinal portions having different cross sections so as to form a rectangular to circular converter, with a rectangular port (3re) on the common side and a circular port (3ci) on the opposite side relative to the common side of the first waveguide substrate element (1a).

6. Method according to claim 2, 3 or 4, wherein the waveguide section (3) is milled with longitudinal portions having different cross sections so as to form a rectangular to square converter, with a rectangular port (3re) on the common side and a square port on the opposite side relative to the common side of the first waveguide substrate element (1a).

7. Method according to any of the preceding claims, wherein, milling the waveguide cavities (3, 5a) comprises milling two straight cavities from two adjacent sides of the first waveguide substrate element (1a), in a way that said cavities join to form a milled cavity bend (5a) which forms the second waveguide cavity (5 a).

8. Method according to claim 7, wherein milling the two straight cavities from two adjacent sides of the first waveguide substrate element (1a), comprises milling a stepped, chamfered or circular bend at the joining ends of the straight cavities.

9. Method according to any of the preceding, claims wherein milling a recess (5b) in the second substrate element (1b) comprises milling steps, chamfers or circular walls on longitudinal ends of the recess (5b) to form stepped, chamfered or circular bends at said longitudinal ends.

**10.** Method according to any of the preceding claims, wherein the first and/or second waveguide substrate elements (1a, 1b) are made of metal.

**11.** Method according to any of claims 1 to 9, wherein the first and/or second waveguide substrate elements (1a, 1b) are dielectric substrate elements, and the method further comprises metallizing the inner walls of the cavities.

**12.** Method according to any of the preceding claims, further comprising:

○ milling a groove (13) surrounding the first and second ports (3re, 5re) of the waveguide cavities (3, 5a) located on the common side of the first substrate element (1a) and/or of the side of the second substrate element (1b), and,
○ inserting a gasket (15) in the groove (13) when assembling the first and second substrate elements (1a, 1b) together.

**13.** An apparatus, comprising :

○ a first waveguide substrate element (1a), comprising two waveguide cavities (3, 5a) having respectively a first and a second port (3re, 5re) located on a common side of the first waveguide substrate element (1a); and
○ a second waveguide substrate element (1b) having a recess (5b) located on a first side of the second waveguide substrate element (1b), wherein
○ the common side of the first substrate element (1a) and the first side of the second substrate element (1b) are configured to be joined across a joint (X).

**14.** Radio system, comprising :

○ two signal generating elements (ODU1, ODU2);
○ an antenna (103); and
○ an orthomode transducer (101) comprising :

■ a first waveguide substrate element (1a), having a first and a second signal generating element waveguide sections (5, 7) and an antenna feed waveguide section (3), the first signal generating element waveguide section (5) and the antenna feed waveguide section (3) having respectively a first and a second port (3re, 5re) on a common side of the first waveguide substrate element (1a), and the second signal generating element waveguide sections (7) having an end configured to couple to the antenna feed waveguide section (3),

■ a second waveguide substrate element (1b), having a recess (5b) on a first side of the second waveguide substrate element (1b), the waveguide cavities (3, 5a) and the recess (5b) being configured to be joined across a joint (X),

wherein the first and second signal generating element waveguide sections (5, 7) are configured to be connected each to one of the signal generating elements (ODU1, ODU2), and the antenna feed waveguide section (3) is configured to be connected to the antenna (103).

**15.** Radio system according to claim 14, wherein the first and second signal generating elements (ODU1, ODU2) each being configured to generate a signal polarized orthogonally to one another, and the first and the second signal generating element waveguide sections (5, 7) have rectangular (re) cross-sections, and the antenna feed waveguide portion (3) comprises longitudinal portions having different cross sections so as to form a rectangular to circular or square converter, with a rectangular port (3re) located on the common side of the first substrate element (1a) and a circular or square port (3ci) connected to the antenna (103).

Fig. 1
(prior art)

Fig. 2
(prior art)

Fig. 3

a/2

re

*E*

a

Fig. 4a

ci

b

Fig. 4b

a

sq

a

Fig. 4c

ODU1  5*in*  1b

1a  5a  5

5b

5*re*

3  3*ci*  3*re*

z

x  y

103  X

7*m*

7  101

7*re*

ODU2

Fig. 5

200

| 201 | 203 | 205 | 207 | 209 |

Fig. 6

Fig. 7a

Fig. 7b

Fig. 7c

Fig. 7d

Fig. 7e

Fig. 8a

Fig. 8b

Fig. 9a

Fig. 9b

Europäisches
Patentamt

European
Patent Office

Office européen
des brevets

# EUROPEAN SEARCH REPORT

Application Number

EP 17 30 6086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 426 783 A1 (FEROX COMMUNICATIONS S L [ES]) 7 March 2012 (2012-03-07) | 1-6,9-15 | INV. H01P1/161 |
| Y | * paragraphs [0029] - [0045] * <br> * claim 6 * <br> * figures 2, 4 * | 7,8 | |
| Y | CN 203 456 566 U (SENTELIC CORP) 26 February 2014 (2014-02-26) <br> * paragraph [0002] * <br> * paragraphs [0029], [0032] * <br> * figures 2, 6, 7 * | 7,8 | |
| A | US 2013/265204 A1 (DONG JUNWEI [CN] ET AL) 10 October 2013 (2013-10-10) <br> * paragraphs [0048], [0049] * <br> * figures 5, 6, 8a, 8b * | 1-15 | |
| A | EP 0 502 499 A2 (NEC CORP [JP]) 9 September 1992 (1992-09-09) <br> * column 3, line 20 - column 5, line 56 * <br> * figures 1-4 * | 1-15 | |
| A | EP 2 600 465 A1 (SIAE MICROELETTRONICA SPA [IT]) 5 June 2013 (2013-06-05) <br> * paragraphs [0020] - [0025] * <br> * figures 4-6 * | 1-15 | TECHNICAL FIELDS SEARCHED (IPC) <br><br> H01P |

The present search report has been drawn up for all claims

| Place of search | Date of completion of the search | Examiner |
|---|---|---|
| The Hague | 6 February 2018 | Culhaoglu, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6086

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2018

| Patent document cited in search report | | | Publication date | Patent family member(s) | | | Publication date |
|---|---|---|---|---|---|---|---|
| EP 2426783 | A1 | | 07-03-2012 | EP | 2426783 | A1 | 07-03-2012 |
| | | | | ES | 2362761 | A1 | 13-07-2011 |
| | | | | US | 2012105171 | A1 | 03-05-2012 |
| | | | | WO | 2010125214 | A1 | 04-11-2010 |
| CN 203456566 | U | | 26-02-2014 | NONE | | | |
| US 2013265204 | A1 | | 10-10-2013 | CN | 103138036 | A | 05-06-2013 |
| | | | | US | 2013265204 | A1 | 10-10-2013 |
| EP 0502499 | A2 | | 09-09-1992 | AU | 648962 | B2 | 05-05-1994 |
| | | | | CA | 2062209 | A1 | 05-09-1992 |
| | | | | DE | 69225988 | D1 | 30-07-1998 |
| | | | | DE | 69225988 | T2 | 11-02-1999 |
| | | | | DE | 69232141 | D1 | 22-11-2001 |
| | | | | DE | 69232141 | T2 | 21-03-2002 |
| | | | | EP | 0502499 | A2 | 09-09-1992 |
| | | | | EP | 0809316 | A1 | 26-11-1997 |
| | | | | US | 5243306 | A | 07-09-1993 |
| EP 2600465 | A1 | | 05-06-2013 | EP | 2600465 | A1 | 05-06-2013 |
| | | | | ES | 2534785 | T3 | 28-04-2015 |

EPO FORM P0459

For more details about this annex : see Official Journal of the European Patent Office, No. 12/82